(19) Europäisches Patentamt / European Patent Office / Office européen des brevets

(11) **EP 2 993 323 B1**

(12) **EUROPEAN PATENT SPECIFICATION**

(45) Date of publication and mention
of the grant of the patent:
**19.07.2017 Bulletin 2017/29**

(51) Int Cl.:
***F01N 3/28*** *(2006.01)*     ***F01N 3/021*** *(2006.01)*

(21) Application number: **14183508.2**

(22) Date of filing: **04.09.2014**

(54) **Mounting mat for a pollution control element or a chemical reactor**

Montagematte für ein Verschmutzungskontrollelement oder einen chemischen Reaktor

Mât de montage pour un élément de lutte contre la pollution ou un réacteur chimique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.03.2016 Bulletin 2016/10**

(73) Proprietor: **3M Innovative Properties Company
Saint Paul, MN 55133-3427 (US)**

(72) Inventors:
• **Rochaz, Christoph
50259 Pulheim (DE)**
• **Gervers, Nicole
40668 Meerbusch (DE)**

• **Middendorf, Claus
41468 Neuss (DE)**
• **Kunze, Ulrich
41363 Juechen (DE)**

(74) Representative: **Bergen, Katja
Office of Intellectual Property Counsel
3M Deutschland GmbH
Carl-Schurz-Str. 1
41453 Neuss (DE)**

(56) References cited:
**EP-A1- 0 501 733**     **WO-A1-2014/125024
WO-A2-03/099420**     **US-A1- 2011 030 355**

**Description**

The invention relates to a mounting mat for holding a ceramic substrate of a pollution control element or a chemical reactor, the pollution control element or chemical reactor comprising more than one substrate. The invention also relates to a pollution control element or chemical reactor comprising such a mounting mat and the invention relates to a method of assembling a pollution control element or chemical reactor with such a mounting mat.

Pollution control devices may be employed on for example motor vehicles, ships or other engines, e.g. stationary industrial engines, to control atmospheric pollution. Such devices may include catalytic converters and diesel particulate filters or traps. Catalytic converters typically contain a ceramic monolithic structure which supports the catalyst (e.g. a catalyst carrier or element). Diesel particulate filters or traps are typically wall flow filters which have honeycombed monolithic structures typically made from porous crystalline ceramic material (i.e., filter element). Each of these devices usually has a metal housing (typically stainless steel) in which the pollution control element or several pollution control elements is or are contained. A mat comprising ceramic fibers is typically used to mount and protect the pollution control element within the housing. Ceramic monolithic structures coated with a catalyst can also be used in chemical reactors, specifically in flow-through reactors for reaction in the gas phase.

US 2001/0030355 A1 discloses a catalytic converter cartridge comprising multiple square, rectangular or other flat sided catalyst coated substrates, each substrate of which has each of its flat sides covered by a compressible mat material. These multiple mat covered substrates or modules are arranged into a multiple module array enclosed within a metal shell with each module preferably separated from adjacent modules by sheet metal spacers. In addition to the mats and the metal spacers corner assembly aids, which may be left in place as the metal spacers, are foreseen.

DE 30 46 921 A1 discloses a catalytic converter comprising multiple flat sided substrates having a rectangular cross section. In order to hold the substrates in place, rigid L-shaped holding elements are provided that are positioned on both ends of the substrate. The holding elements provide additional holding edges extending perpendicular to the respective holding element.

WO2012084609A1 discloses a chemical reactor utilizing multiple ceramic substrates as carrier for the catalyst.

EP 0,501,733 A1 discloses a support structure for substrates with a square framework member and a plurality of crossbeam members.

WO 2014/125,024 A1 discloses a method for mounting monoliths, which are each formed from a ceramic block. The method is characterized in that the monoliths are sealed from each other by means of mats.

In view of the above prior art there is still a need for a mounting mat that enables building a simpler pollution control element or chemical reactor and providing a simplified method for assembling a pollution control element or chemical reactor. There is also still a need for a simpler pollution control element or chemical reactor itself.

The present invention provides a mounting mat for holding a substrate of a pollution control element or chemical reactor. The pollution control element or chemical reactor comprising more than one substrate, wherein the substrate comprises a front face, a rear face and at least three flat side faces extending between the front and the rear face, wherein the mounting mat is shaped such that it covers at least partially two flat side faces and at least partially the edge enclosed by the two flat side faces (enclosed edge), and wherein between the two substrates only one mounting mat is positioned.

Enclosed edge in the sense of the invention is the edge that is enclosed by the two flat side faces that are covered by the mounting mat in a preassemble stage. Adjacent edge in the sense of the invention is the edge that is enclosed by a flat side face that is covered by a mounting mat and a flat side face that is not covered by a mounting mat in a preassembled stage. Preassembled stage means the stage when the mounting mats are already attached to the substrates but the substrates with mounting mats are not yet integrated into a housing.

A pollution control element according to the invention is an element used in e.g. motor vehicles, ships or other engines, such as e.g. stationary industrial engines for example gas turbines, to control the atmospheric pollution. Examples for pollution control elements are catalytic converters and diesel particulate filters. Other examples are selective catalytic reduction elements or chemical reactors including substrates, e.g. ceramic substrates. A chemical reactor according to the invention is a system for carrying out chemical reactions. If for these chemical reactions catalysts are needed, it is possible to use ceramic substrates inside the chemical reactor carrying the catalysts for the reaction.

Pollution control elements usually comprise a substrate. Chemical reactors may comprise substrates as well. Catalytic converters for example comprise a flow-through substrate, e.g. a ceramic flow-through substrate. Diesel particulate filters typically comprise wall-flow filters which have honeycombed monolithic structures, for example made from porous crystalline ceramic materials.

Especially when the pollution control element or the chemical reactor comprises more than one substrate the holding and sealing function gets more complex compared to systems with only one substrate, since holding and sealing does not only need to be performed between a substrate and a housing of a pollution control element or chemical reactor but also between two substrates.

The invention relates to substrates that comprise a front face, a rear face and at least three flat side faces extending between the front and the rear face. In most of the cases, the substrates comprise four flat side faces. But the invention is not limited to those embodiments with four side faces. The front and the rear face are those faces of the substrate that are oriented substantially perpendicular to the flow of gas inside the substrate. In other words they either face the entering gas flow or they face the exiting gas flow of the substrate. The side faces are oriented substantially parallel to the flow of gas inside the substrate and they may be oriented substantially perpendicular to the front and the rear face. The invention is not limited to the above described substrates. It is also possible that the side faces are oriented in an angle not perpendicular to the front and/or the rear face. It is also possible that the front and the rear face are oriented in an angle other than 90° relative to the flow of gas inside the substrate.

According to the invention the side faces are substantially flat or plain in a geometrically sense. That means that two flat side faces enclose an edge, wherein the enclosed edge is defined as an essentially linear line joining the two flat side faces. It is of cause possible that the enclosed edge comprises - due to manufacturing reasons - a slightly rounded shape, which extends in a linear direction. The side faces may comprise any suitable shape such as for example rectangular or square.

According to the invention the mounting mat is shaped such that it covers - at least partially - an edge enclosed by two flat side faces. Instead of having a mounting mat for each flat side face, the mounting mats are shaped such that they may cover more than only one flat side face. This may reduce the number of mounting mats needed for one pollution control element or chemical reactor. If less mounting mats are needed, less steps for assembling a pollution control element or chemical reactor are needed as well. This saves time and costs in the production process. Covering the enclosed edge at least partially means that the mounting mat may extend from the front face to the rear face and cover the entire enclosed edge. It is also possible that the mounting mat only extends partially between the front and the rear face. For example it is possible that the mounting mat does not extend completely up to the edge between side face and front/rear face. Such a configuration helps that in the assembled stage (substrate inside a housing) the mounting mat does not swell out of the housing. Another possibility is that more than one, e.g. two mounting mats are arranged parallel to each other each mat covering the enclosed edge partially.

According to one aspect of the invention, the mounting mat is a non-woven mounting mat comprising inorganic fibers. Generally all commonly known mounting mats can be used that are flexible and heat-resistant and that are able to hold the substrate of the pollution control element or chemical reactor in place and to seal the area around a substrate to isolate the substrate. Commonly known mounting mats comprise ceramic and/or glass fibers. The mounting mats may be intumescent mats or non-intumescent mats. If they are intumescent mats they may also include blowing agents like vermiculite or graphite. In order to compress the mounting mats, binders may be used and/or they may be compressed by mechanical processes such as for example needling.

According to another aspect of the invention the substrate is a ceramic substrate. Any known ceramic substrates may be used for the invention. Depending on the application of the substrate it may for example provide a flow-through characteristic or a wall-flow characteristic. They may comprise a catalyst coated on the substrate or integrated into the substrate.

If the pollution control element is a catalyst carrier, the substrate may be a catalyst coated ceramic substrate or a ceramic substrate including catalyst like acting particles, like vanadium pentoxide. The ceramic substrate may in this case for example comprise titan dioxide with vanadium pentoxide and wolfram oxide. If the pollution control element is a diesel particulate filter, the substrate may comprise silicium carbide, aluminium titanat or cordierite. If the substrate is a honeycomb catalyst, it may comprise titanium oxide, tungsten oxide and vanadium pentoxide. The required mechanical strength of the substrate may be achieved by adding for example glass fibers.

The substrate according to the invention may comprise four flat side faces that extend between the front and the rear face and the substrate may comprise a squared cross section. The four flat side faces may all comprise the same shape. They may be rectangular or square. It is also possible that at least two of the four flat side faces comprise the same shape.

The mounting mat is shaped such that it covers at least partially two flat side faces (2-side wrapped substrate) and at least partially the edge enclosed by the two flat side faces of the substrate (enclosed edge). All possible configurations are meant to be claimed where the mounting mat covers at least partially two flat side faces and at least partially the edge between the two flat side faces. The mounting mat may for example extend along the entire width of two flat side faces from the enclosed edge up to each adjacent edge and along the entire length of the substrate from the front face towards the rear face. Another option is that the mounting mat according to the invention extends over the edge between two flat side faces (enclosed edge) along the entire length of the substrate but only covers parts of the width of the substrates and therewith of the two flat side faces, e.g. from the enclosed edge towards the middle of the flat side faces. It is also possible that one side face is covered completely and the other side face is covered partially.

The mounting mat may be shaped such that it covers at least partially three flat side faces (3-side wrapped substrate) and at least partially the two edges enclosed by two respective flat side faces of the substrate (enclosed edge). All possible configurations are meant to be claimed where the mounting mat covers at least partially three flat side faces and at least partially the two edges between two respective flat side faces. The mounting mat may for example extend along the entire width of three flat side faces from the enclosed edges to the adjacent edges and along the entire length of the substrate from the front face towards the rear face. Another option is that the mounting mat according to the invention extends over the two edges between three flat side faces (enclosed edges) along the entire length of the substrate but only covers parts of the two outer flat side faces. It is also possible that one or two of the flat side faces are covered completely and the remaining side faces are covered partially.

According to another embodiment of the invention the mounting mat may cover the entire two or three flat side faces (2-side wrapped or 3-side wrapped substrates) that enclose an edge up to the adjacent edges of the substrate. The entire flat side faces means that the mounting mat extends substantially over the entire surface of the flat side faces from the front face to the rear face and from the enclosed edge to the adjacent edges. The mat may thereby extend exactly from the front to the rear face and from one edge between two flat side faces to the other edge between two flat side faces. It is also possible - as already pointed out above - to leave a space at each edge of the front and the rear face in order to avoid the mat being squeezed out when being assembled with the substrate in a housing.

The 2-side wrapped substrates and the 3-side wrapped substrates can be used as preassembled components in the production process of pollution control elements or chemical reactors. With those preassembled components it is possible to assemble all kind of different pollution control configurations, e.g. different ways of arranging substrates in rows. For doing that only a minimum amount of different components is needed: a) the substrate, b) a mounting mat shaped such that it at least partially covers two flat side faces and at least partially the edge between them and c) a mounting mat shaped such that it at least partially covers three flat side faces and at least partially the two edges between two respective flat side faces. The reduced number of different parts needed reduces the complexity of the whole production process. It reduces the number of process steps and the complexity of handling parts during the assembly process. All these facts reduce the costs of the process and make the process more reliable since the risk for potential operator mistakes is also reduced.

It is also possible that the mounting mat only extends up to a defined width or distance before an adjacent edge. This space or receiving portion, where a flat side face of the substrate is not covered with a mounting mat, may for example be used as a receiving portion for a mounting mat or a part of an adjacent substrate of the pollution control element or chemical reactor.

The mounting mat may also extend over the adjacent edge and be placed in an above described receiving portion, when being assembled. The part of the mounting mat extending over the adjacent edge may be used for additional sealing purposes.

The invention also relates to a pollution control element or chemical reactor comprising more than one substrate as well as a mounting mat as described above.

According to one embodiment of the invention the pollution control element or chemical reactor may comprise four substrates arranged in two rows of two substrates. According to another embodiment of the invention, the pollution control element or chemical reactor may comprise nine ceramic substrates arranged in three rows of three substrates. These two configurations are commonly used configurations of substrates in pollution control systems. For theses configurations the below is a way to calculate the needed number of preassembled components (2-side wrapped and 3-side wrapped substrates).

If preassembled components of 2-side wrapped substrates and 3-side wrapped substrates exist, the following is a way to calculate the number of 2-side wrapped and 3-side wrapped substrates needed: when z is the number of substrates in a row and the number of rows; when x is the number of 3-side wrapped substrates and when y is the number of 2-side wrapped substrates, x is equal to 2 times z and y is equal to (z - 2) multiplied with z.

All other configurations are possible as well such as for example u numbers of substrates in a row and v rows of substrates. When v is > then 2 the number of 2-side wrapped and 3-side wrapped substrates can be calculated as follows: when x is the number of 3-side wrapped substrates and when y is the number of 2-side wrapped substrates, x is equal to u + v and y is equal to u times v - x.

The invention does also include systems, with only one row of substrates. The invention does also include systems with at least one substrate that is entirely wrapped with one mat (e.g. 4-side wrapped). And the invention does also include systems with at least one substrate that is not wrapped with a mounting mat at all. The invention also relates to a method for assembling a pollution control element according to claim 13. Fastening of the mounting mat can for example be done by means of an adhesive. It is possible to apply the adhesive while assembling the pollution control element or chemical reactor. The adhesive may be applied in the form of a liquid adhesive, e.g. while assembling the pollution control element or chemical reactor. The adhesive may also be applied in the form of a tape, e.g. a double sided tape. The tape may include a liner. Therefore it would be possible to have a mat with a tape and a liner as a component for assembling the pollution control element or chemical reactor.

All typical methods for placing a substrate inside a housing may be used, such as for example stuffing, placing the substrates into the housing and closing the housing around the substrates followed by welding the housing etc.

The invention will now be described in more detail with reference to the following Figures exemplifying particular embodiments of the invention:

Fig. 1     is a front view of a pollution control element or a chemical reactor according to the invention;

Fig. 2     is a perspective view of the pollution control element or chemichal reactor according to the invention;

Fig. 3     schematically shows a preassembled component of a pollution control element or chemical reactor comprising a substrate and a mounting mat that is shaped such that it covers three flat side faces and the edges enclosed by two respective side faces;

Fig. 4     schematically shows a preassembled component of a pollution control element or chemical reactor comprising a substrate and a mounting mat that is shaped such that it covers two flat side faces and the edge enclosed by two respective side faces;

Fig. 5     is another embodiment of a preassembled component of a pollution control element or chemical reactor comprising a substrate and a mounting mat that is shaped such that it covers three flat side faces and the edges enclosed by two respective side faces;

Fig. 6     is another embodiment of a preassembled component of a pollution control element or chemical reactor comprising a substrate and a mounting mat that is shaped such that it covers two flat side faces and the edge enclosed by two respective side faces;

Fig. 7     schematically shows four preassembled components oriented such as to be placed in a housing in order to build a pollution control element or chemical reactor;

Fig. 8     schematically shows the steps of a method for assembling a pollution control element or chemical reactor;

Fig. 9     schematically shows nine preassembled components oriented such as to be placed in a housing in order to build a pollution control element or chemical reactor with mounting mats according to the invention;

Fig. 10    schematically shows nine different preassembled components oriented such as to be placed in a housing in order to build a pollution control element or chemical reactor with mounting mats according to the invention;

Fig. 11    schematically shows the four preassembled components of Fig. 3 with additional sealing elements;

Fig. 12    schematically shows additional embodiments of preassembled components oriented such as to be placed in a housing in order to built a pollution control element or chemical reactor with mounting mats according to the invention;

Fig. 13    schematically shows another embodiment of preassembled components oriented such as to be placed in a housing in order to built a pollution control element or chemical reactor with mounting mats according to the invention and

Fig. 14    schematically shows yet another embodiment of preassembled components oriented such as to be placed in a housing in order to built a pollution control element or chemical reactor with mounting mats according to the invention.

Herein below various embodiments of the present invention are described and shown in the drawings wherein like elements are provided with the same reference numbers.

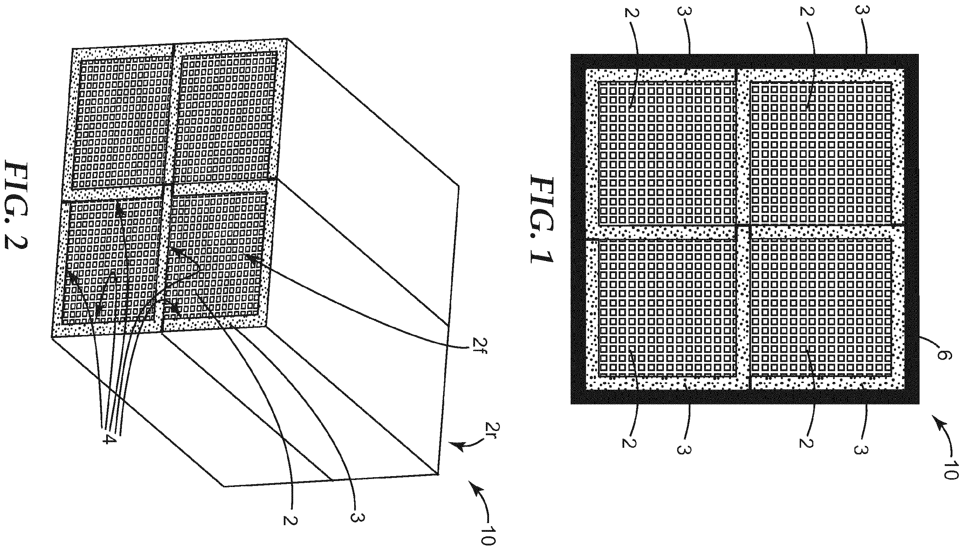

Fig. 1 shows a pollution control element or chemical reactor 10 with four substrates 2 wrapped by mounting mats 3 according to the invention. Fig. 2 is a dimensional view of the four substrates 2 with their mounting mats as they are positioned in the pollution control element or chemical reactor 10 of Fig. 1. The substrates comprise a front face 2f, a rear face 2r and four side 4 faces (here covered with mourning mats). With reference to the following figures it will be explained how the substrates 2 get wrapped with the mounting mats according to the invention and how the pollution control element or chemical reactor 10 gets assembled.

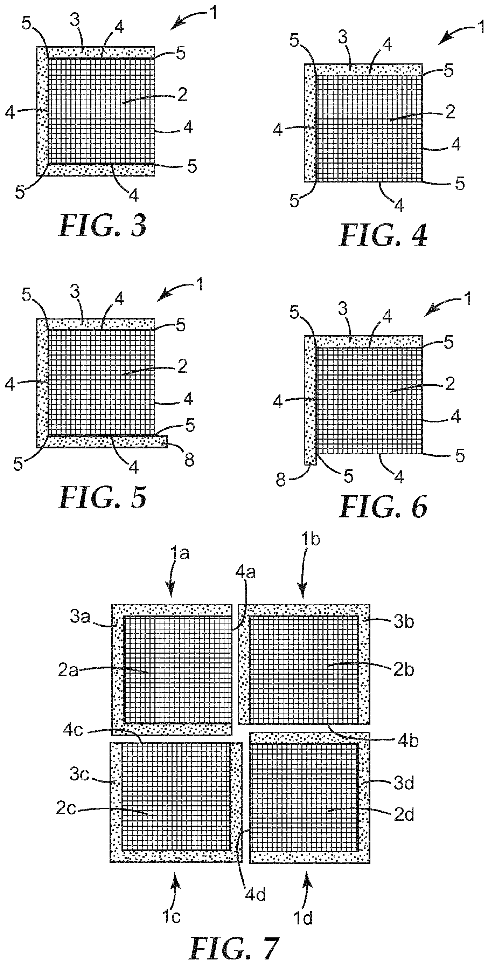

Fig. 3 schematically shows a preassembled component 1 of a pollution control element or chemical reactor 10 as utilized in the pollution control element or chemical reactor shown in Fig. 1. The preassembled component 1 comprises a substrate 2 and a mounting mat 3. In Fig. 3 they are shown in a cross sectional view. The substrate 2 comprises a squared cross section. It also comprises a front face and a rear face (as shown in Fig. 2) as well as four flat side faces 4. The mounting mat 3 is shaped such that it covers three flat side faces 4 entirely and the edges 5 enclosed by two respective side faces 4 (enclosed edge). The fourth flat side face 4 of the substrate 2 is not covered by a mounting mat. The mounting mat 3 covers the substrate 2 over its entire length, from the front to the rear face. It is possible to leave a little bit of space at the front and at the rear in order to prevent the mounting mat 3 from being squeezed out of the housing when the pollution control element or chemical reactor is assembled.

Fig. 4 schematically shows a preassembled component 1 of a pollution control element or chemical reactor 10 as shown in Fig. 1, that differs from the one shown in Fig. 3 in that the mounting mat 3 covers only two flat side faces 4 of the substrate 2 instead of three. The two other flat side faces 4 are not covered with a mounting mat 3.

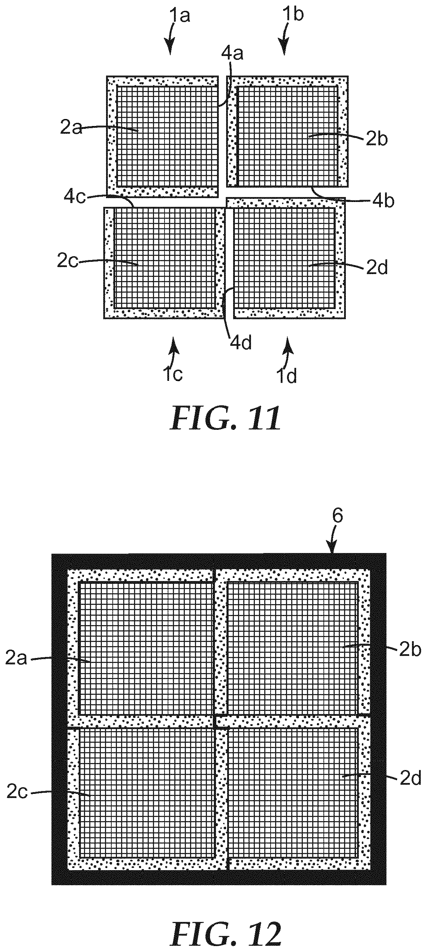

Fig. 5 and 6 schematically show the preassembled components 1 of Fig. 3 and 4. The preassembled components 1 of Fig. 5 and 6 differ from those shown in Fig. 3 and 4 in that the mounting mats 4 comprise a protrusion 8 at one end, where the mounting mats 4 protrude the edge of the substrate. The protrusion may be used for sealing an assembly of substrates as will be described in more detail with reference to Fig. 11 and 12.

Fig. 7 schematically shows four of the preassembled components 1 of Fig. 3 oriented such as to be placed in a housing in order to build a pollution control element or chemical reactor 10. The upper left component 1 a (3-side wrapped component) comprises one flat side face 4a that is not covered with a mounting mat 3. This flat side face 4a is directed to the right of the drawing. All other side faces are covered with a mounting mat 3a. The upper right component 1 b comprises one flat side face 4b that is not covered with a mounting mat 3. This flat side face 4b is directed to the bottom of the drawing. All other side faces are covered with a mounting mat 3b. The lower left component 1 c comprises one flat side face 4c that is not covered with a mounting mat 3. This flat side face 4c is directed to the top of the drawing. All other side faces are covered with a mounting mat 3c. The lower right component 1d comprises a flat side face 4d that is not covered with a mounting mat 3. This flat side face 4d is directed to the left of the drawing. All other side faces are covered with a mounting mat 3d. The described arrangement guarantees that all sides of the four substrates 2a, 2b, 2c, 2d are coved by a mounting mat 3 in an assembled stage. The benefit of the described arrangement is that the pollution control element or chemical reactor can be built up with four identical preassembled components 1 a, 1 b, 1 c, 1 d. Thus, the assembly process is very simple and therefore cost effective. Another benefit of the descried arrangement is that due to the reduced number of parts and the reduced process steps, the process is less complex and therefore potential mistakes of an operator may be prohibited. Compared to pollution control elements or chemical reactors according to the prior art less material for mounting mats is needed, since every flat side wall is only covered with one layer of mounting mat material. No additional holding or separating means are needed.

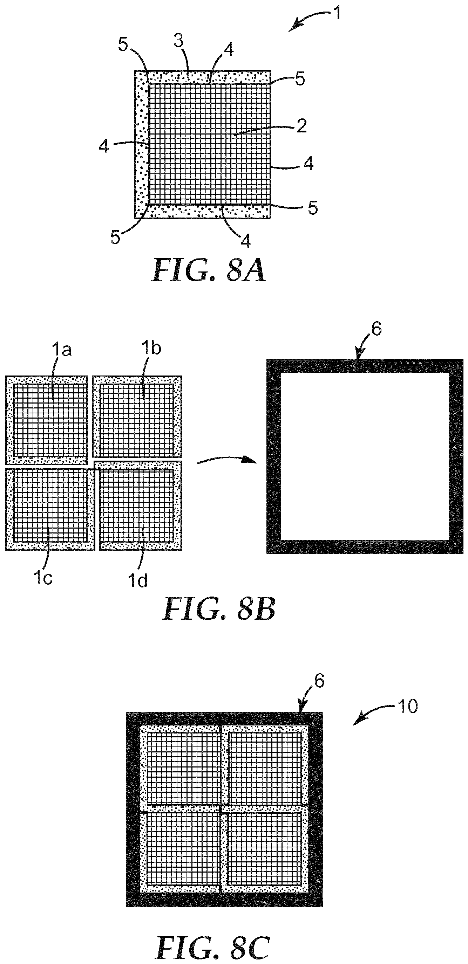

Fig. 8A, 8B and 8C schematically show one method of assembling a pollution control element or chemical reactor 10 according to the invention. The pollution control element or chemical reactor 10 comprises more than one substrate. As a first step a substrate 2 is provided, wherein the substrate comprises a front face, a rear face and four flat side faces 4 extending between the front and the rear face. In Fig. 8A, 8B and 8C only a cross section of the substrate 2 is shown. Therefore only the front face is shown in this drawing. As already described with reference to Fig. 3 the substrate 2 is wrapped by a mounting mat 3. The mounting mat is shaped such, that it covers three flat side faces 4 as well as two edges between two respective flat side faces 4 of the substrate 2 (3-side wrapped). The mounting mat 3 is fastened at the substrate 2 by adequate means, e.g. by an adhesive. The above described steps are repeated four times until four substrates 2 are wrapped with mounting mats 3 on three flat side faces 4 of the substrates 2. Each substrate 2 provides one flat side face 4 that is not covered with a mounting mat. 3. Instead of using four identical preassembled components it is also possible to use three identical components as shown in Fig. 7 and one preassembled component with a protrusion 8 as shown in Fig. 5 to seal an opening in the middle that might occur.

As a next step of the method for assembling a pollution control element or chemical reactor, the preassembled components (wrapped substrates) are placed next to each other such that all substrates' flat side walls are placed next to a mounting mat, either a portion of a mounting mat 3 fixed to that specific substrate or a portion of a mounting mat of an adjacent substrate. One possibility of doing that has been described with reference to Fig. 7.

Finally all substrates 2 with the mounting mats 3 wrapped around them are placed inside an adequate housing 6. The placing inside of a housing can be done with all generally known methods for placing a substrate 2 in a housing 6, such as stuffing, canning, closing the housing around the substrates with fastening it e.g. by welding.

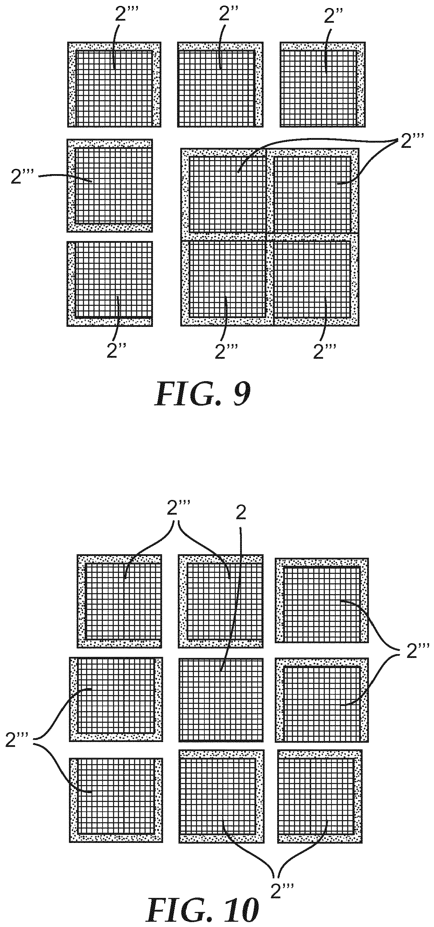

Fig. 9 schematically shows nine preassembled components oriented such as to be placed in a housing in order to build a pollution control element or chemical reactor with mounting mats 3 according to the invention. The assembly of Fig. 9 starts with an assembly that is shown in Fig. 7 - four preassembled components each comprising a 3-side wrapped substrate 2 - and has already been described with reference to Fig. 7 as well as Fig. 8A, 8B and 8C. In addition to the four 3-side wrapped substrates 2, the assembly of Fig. 9 comprises three 2-side wrapped substrates 2" and two 3-side wrapped substrates 2"'. Again the substrates are arranged such that each flat side wall is covered by at least a portion of a mounting mat. 3, either a portion of a mounting mat 3 fixed to that specific substrate or a portion of a mounting mat of an adjacent substrate. From the left to the right the upper row comprises first a 3-side wrapped substrate 2"' and then two 2-side wrapped substrates 2"; the second row comprises three 3-side wrapped substrates and the third row comprises first a 2-side wrapped substrate 2" and then two 3-side wrapped substrates 2"'. The way the 2-side wrapped and the 3-side wrapped substrates are arranged can differ, but the number of 2-side wrapped and 3-side wrapped substrates stays the same.

The following is a way to calculate the number of 2-side wrapped and 3-side wrapped substrates needed, when you have a pollution control element or chemical reactor with the same number of rows as you have substrates in one row (squared assembly):

when z is the number of substrates in a row and the number of rows; when x is the number of 3-side wrapped substrates and when y is the number of 2-side wrapped substrates, x is equal to 2 times z and y is equal to (z - 2) multiplied with z.

For the assembly shown in Fig. 9 this means that:

$$z = 3 \text{ therefore}$$

$$x = 2 \times 3 = 6 \text{ (3-side wrapped substrates 2''')}$$

and

$$y = (3-2) \times 3 = 3 \text{ (2-side wrapped substrates 2'')}.$$

For configurations that are not square and if the number of rows is higher than 2 the following equation can be used to calculate the number of 2-side wrapped and 3-side wrapped substrates:

- u is the number of substrates in a row
- v is the number of rows
- x is the number of 3-side wrapped substrates
- y is the number of 2-side wrapped substrates

$$x = u + v$$

and

$$y = u * v - x.$$

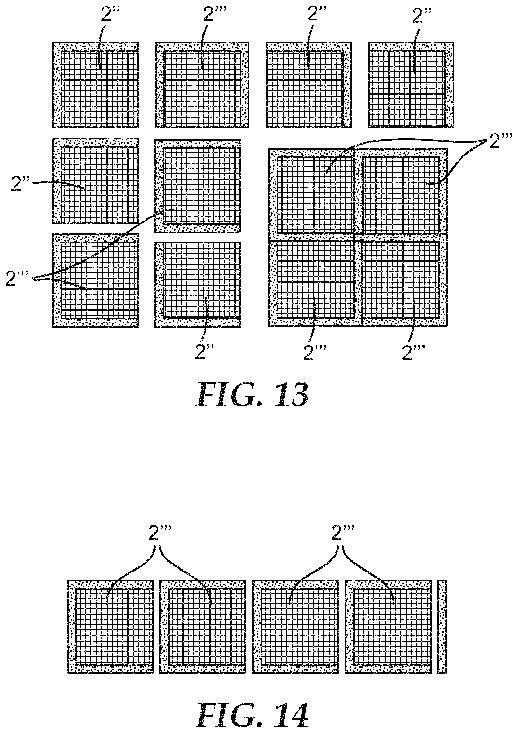

For the assembly shown in Fig. 13 this means that:

$$u = 4$$

and

$$v = 3$$

therefore

$$x = 4 + 3 = 7 \text{ (3-side wrapped substrates 2''')}$$

and

$$y = 4 * 3 - 7 = 5 \text{ (2-side wrapped substrates 2'')}.$$

Fig. 10 schematically shows another embodiment of an assembly with nine different preassembled components oriented such as to be placed in a housing in order to build a pollution control element or chemical reactor with mounting mats according to the invention. In this embodiment only one kind of preassembled component - 3-side wrapped substrates 2''' - are used as well as one substrate 2 without a mounting mat 3. The substrate 2 that is not wrapped with a mounting mat 3 is placed in the middle. The 3-side wrapped substrates 2''' are positioned around the substrate 2 without a mounting mat 3. The 3-side wrapped substrates 2''' are oriented such that the respective flat side face 4 that is not covered with a mounting mat 4 faces towards an adjacent 3-side wrapped substrate 2'''. By that all flat side faces of all substrates 2, 2''' are covered by at least a portion of a mounting mat 4.

Depending on the tolerances of the substrates and the shapes of the mounting mats it is possible, that after placing wrapped substrates next to each other, a space or spaces in between the substrates/mounting mats exist, that needs to be sealed. A possible area for such a space may be the area, where four wrapped substrates or preassembled components touch each other. In order to seal this space, it is possible to use an additional piece of sealing materiel - e.g. narrow Interam ™ band from roll. This material may for example be cut from a roll into the right length/width to sufficiently seal the space. The advantage of using an additional material for sealing purposes is that a space, for example in the centre may be filled and sealed perfectly.

Instead of using a separate piece of sealing material a preassembled component as shown in Fig. 5 and 6 could be used, where the mounting mat 4 extends the substrate at one end (extension 8). This is shown in Fig. 11 before and in Fig. 12 after assembly.

Fig. 14 shows another embodiment of preassembled components oriented such as to be placed in a housing in order to build a pollution control elements or chemical reactors with mounting mats according to the invention. The pollution control elements or chemical reactors comprise one row of four substrates. All four substrates are 3-side wrapped substrates. The side face of the substrate on the right hand side that is not covered by a mounting mat can for example be covered with a mounting mat that is shaped as to cover only one side face. It is also possible to use as the substrate on the right hand side instead of the 3-side wrapped substrate a substrate that is covered on all four sides with a mounting mat.

**Claims**

1. Pollution control element or chemical reactor comprising more than one substrate (2), wherein the substrate comprises a front face (2f), a rear face (2r) and at least three flat side faces (4) extending between the front and the rear face, wherein between two substrates (2) only one mounting mat (4) is positioned; **characterized in that** the mounting mat (3) is shaped such that it covers at least partially two flat side faces and at least partially the edge (5) enclosed by the two flat side faces..

2. Pollution control element or chemical reactor according to claim 1, wherein the mounting mat (3) is a non-woven mounting mat comprising inorganic fibers.

3. Pollution control element or chemical reactor according to claim 1 or 2, wherein the substrate (2) is a ceramic substrate.

4. Pollution control element or chemical reactor according to any of the preceding claims, wherein the substrate (2) comprises four flat side faces (4) that extend between the front (2f) and the rear face (2r) and wherein the substrate comprises a squared cross section.

5. Pollution control element or chemical reactor according to any of the preceding claims, wherein the mounting mat (3) is shaped such that it covers at least partially two flat side faces (4) and at least partially the edge (5) enclosed by the two flat side faces of the substrate (2).

6. Pollution control element or chemical reactor according to any of the preceding claims, wherein the mounting mat (3) is shaped such that it covers at least partially three flat side faces (4) and at least partially the two edges (5) enclosed by two respective flat side faces of the substrate.

7. Pollution control element or chemical reactor according to any of the preceding claims, wherein the mounting mat (4) covers the entire two or three flat side faces (4) that enclose an edge (5) up to an adjacent edge (5) of the substrate.

8. Pollution control element or chemical reactor according to claim 7, wherein the mounting mat (4) may extend over the adjacent edge (5) of the substrate (2).

9. Pollution control element or chemical reactor according to any of the claim 1 to 8, wherein the pollution control element (10) comprises four substrates (2) arranged in two rows of two substrates.

10. Pollution control element or chemical reactor according to any of the claims 1 to 8, wherein the pollution control element (10) comprises nine substrates (2) arranged in three rows of three substrates.

11. Pollution control element or chemical reactor according to any of the claims 9 to 10, wherein the number of substrates (2) in a row is identical to the number or rows.

12. Pollution control element or chemical reactor according to claim 11, wherein

  - when z is the number of substrates in a row and the number of rows;
  - when x is the number of 3-side wrapped substrates; and
  - when y is the number of 2-side wrapped substrates;

x is equal to 2 times z and y is equal to (z - 2) multiplied with z or

  - when u is the number of substrates in a row,
  - when v is the number of rows,
  - when x is the number of 3-side wrapped substrates
  - when y is the number of 2-side wrapped substrates than x is equal to u + v and y is equal to u * v - x.

13. Method of assembling a pollution control element or chemical reactor, according to claims 1 to 8, the method comprising the following steps

  a) providing more than one substrate, wherein the substrate comprises a front face, a rear face and at least three flat side faces extending between the front and the rear face;
  b) providing the mounting mat;
  c) wrapping the mat around the substrate such that it covers at least partially two flat side faces and at least partially the edge enclosed by the two flat side faces of the substrate and fastening it;
  d) repeating step c) as often as substrates are needed to assemble the pollution control element or chemical reactor;
  e) placing the wrapped substrates next to each other so that all substrates' flat side walls are placed next to a mounting mat and
  f) placing the substrates inside a housing.

**Patentansprüche**

1. Emissionsminderungselement oder Chemiereaktor,
   mehr als ein Substrat (2) umfassend,
   wobei das Substrat eine Vorderseite (2f), eine Rückseite (2r) und mindestens drei flache Seitenflächen (4) umfasst, die sich zwischen der Vorder- und der Rückseite erstrecken,
   wobei zwischen zwei Substraten (2) nur eine Montagematte (4) positioniert ist; **dadurch gekennzeichnet, dass** die Montagematte (3) so geformt ist, dass sie zumindest teilweise zwei flache Seitenflächen und zumindest teilweise die Kante (5) abdeckt, die von den beiden flachen Seitenflächen eingeschlossen wird.

2. Emissionsminderungselement oder Chemiereaktor
   nach Anspruch 1, wobei die Montagematte (3) eine Montagematte aus Vlies ist, die anorganische Fasern enthält.

3. Emissionsminderungselement oder Chemiereaktor
   nach Anspruch 1 oder 2, wobei das Substrat (2) ein Keramiksubstrat ist.

4. Emissionsminderungselement oder Chemiereaktor
   nach einem der vorstehenden Ansprüche, wobei
   das Substrat (2) vier flache Seitenflächen (4) umfasst, die sich zwischen der Vorder- (2f) und der Rückseite (2r) erstrecken, und wobei das Substrat einen quadratischen Querschnitt umfasst.

5. Emissionsminderungselement oder Chemiereaktor
   nach einem der vorstehenden Ansprüche, wobei
   die Montagematte (3) so geformt ist, dass sie zumindest teilweise zwei flache Seitenflächen (4) und zumindest teilweise die Kante (5) abdeckt, die von den beiden flachen Seitenflächen des Substrats (2) eingeschlossen wird.

6. Emissionsminderungselement oder Chemiereaktor
   nach einem der vorstehenden Ansprüche, wobei

die Montagematte (3) so geformt ist, dass sie zumindest teilweise drei flache Seitenflächen (4) und zumindest teilweise zwei Kanten (5) abdeckt, die von zwei entsprechenden flachen Seitenflächen des Substrats eingeschlossen werden.

**7.** Emissionsminderungselement oder Chemiereaktor
nach einem der vorstehenden Ansprüche, wobei
die Montagematte (4) die zwei oder drei flachen Seitenflächen (4), die eine Kante (5) bis zu einer benachbarten Kante (5) des Substrats einschließen, vollständig abdeckt.

**8.** Emissionsminderungselement oder Chemiereaktor
nach Anspruch 7, wobei sich die Montagematte (4) über die benachbarte Kante (5) des Substrats (2) erstrecken kann.

**9.** Emissionsminderungselement oder Chemiereaktor nach einem der Ansprüche 1 bis 8,
wobei das Emissionsminderungselement (10) vier Substrate (2) umfasst, die in zwei Reihen aus zwei Substraten angeordnet sind.

**10.** Emissionsminderungselement oder Chemiereaktor nach einem der Ansprüche 1 bis 8, wobei das Emissionsminderungselement (10) neun Substrate (2) umfasst, die in drei Reihen aus drei Substraten angeordnet sind.

**11.** Emissionsminderungselement oder Chemiereaktor nach einem der Ansprüche 9 bis 10, wobei die Anzahl der Substrate (2) in einer Reihe der Anzahl der Reihen entspricht.

**12.** Emissionsminderungselement oder Chemiereaktor nach Anspruch 11, wobei Folgendes gilt:

- wenn z die Anzahl der Substrate in einer Reihe und die Anzahl der Reihen ist;
- wenn x die Anzahl an 3-seitig umhüllten Substraten ist; und
- wenn y die Anzahl an 2-seitig umhüllten Substraten ist;
ist x gleich 2 Mal z und y gleich (z - 2) multipliziert mit z oder
- wenn u die Anzahl der Substrate in einer Reihe ist,
- wenn v die Anzahl der Reihen ist,
- wenn x die Anzahl an 3-seitig umhüllten Substraten ist
- wenn y die Anzahl an 2-seitig umhüllten Substraten ist ist x gleich u + v und y gleich u * v - x.

**13.** Verfahren zur Montage eines Emissionsminderungselements oder Chemiereaktors nach den Ansprüchen 1 bis 8, wobei das Verfahren die folgenden Schritte umfasst

a) Bereitstellung von mehr als einem Substrat, wobei das Substrat eine Vorderseite, eine Rückseite und mindestens drei flache Seitenflächen umfasst, die sich zwischen der Vorder- und der Rückseite erstrecken;
b) Bereitstellung der Montagematte;
c) Umhüllung des Substrats mit der Matte, sodass diese zumindest teilweise zwei flache Seitenflächen und zumindest teilweise die Kante abdeckt, die von den beiden flachen Seitenflächen des Substrats eingeschlossen wird, und dessen Befestigung;
d) Wiederholung von Schritt c) so oft wie die Substrate für die Montage des Emissionsminderungselements oder Chemiereaktors benötigt werden;
e) Platzierung der umhüllten Substrate nebeneinander, sodass die flachen Seitenwände aller Substrate neben einer Montagematte platziert werden und
f) Platzierung der Substrate in einem Gehäuse.

**Revendications**

**1.** Élément antipollution ou réacteur chimique
comprenant plus d'un substrat (2),
dans lequel le substrat comprend une face avant (2f), une face arrière (2r) et au moins trois faces latérales plates (4) s'étendant entre la face avant et la face arrière,
dans lequel un seul mat de montage (4) est positionné entre les deux substrats (2) ; **caractérisé en ce que**
le mat de montage (3) est formé de telle sorte qu'il recouvre au moins partiellement deux faces latérales plates et au moins partiellement le bord (5) délimité par les deux faces latérales plates.

**2.** Élément antipollution ou réacteur chimique
selon la revendication 1, dans lequel le mat de montage (3) est un mat de montage non tissé comprenant des fibres inorganiques.

**3.** Élément antipollution ou réacteur chimique
selon la revendication 1 ou 2, dans lequel le substrat (2) est un substrat céramique.

**4.** Élément antipollution ou réacteur chimique
selon l'une quelconque des revendications précédentes, dans lequel le
substrat (2) comprend quatre faces latérales plates (4) qui s'étendent entre la face avant (2f) et la face arrière (2r) et dans lequel le substrat comprend une section transversale carrée.

**5.** Élément antipollution ou réacteur chimique
selon l'une quelconque des revendications précédentes, dans lequel le
mat de montage (3) est formé de telle sorte qu'il recouvre au moins partiellement deux faces latérales plates (4) et au moins partiellement le bord (5) délimité par les deux faces latérales plates du substrat (2).

**6.** Élément antipollution ou réacteur chimique
selon l'une quelconque des revendications précédentes, dans lequel le
mat de montage (3) est formé de telle sorte qu'il recouvre au moins partiellement trois faces latérales plates (4) et au moins partiellement les deux bord (5) délimités par les deux faces latérales plates respectives du substrat.

**7.** Élément antipollution ou réacteur chimique
selon l'une quelconque des revendications précédentes, dans lequel le
mat de montage (4) recouvre la totalité des deux ou trois faces latérales plates (4) qui délimitent un bord (5) jusqu'à un bord (5) adjacent du substrat.

**8.** Élément antipollution ou réacteur chimique
selon la revendication 7, dans lequel le mat de montage (4) peut s'étendre au-dessus du bord voisin (5) du substrat (2).

**9.** Élément antipollution ou réacteur chimique selon l'une quelconque des revendications 1 à 8,
dans lequel l'élément antipollution (10) comprend quatre substrats (2) disposés en deux rangées de deux substrats.

**10.** Élément antipollution ou réacteur chimique selon l'une quelconque des revendications 1 à 8, dans lequel l'élément antipollution (10) comprend neuf substrats (2) disposés en trois rangées de trois substrats.

**11.** Élément antipollution ou réacteur chimique selon l'une quelconque des revendications 9 à 10, dans lequel le nombre de substrats (2) dans une rangée est identique au nombre de rangées.

**12.** Élément antipollution ou réacteur chimique selon la revendication 11, dans lequel

- lorsque z est le nombre de substrats dans une rangée et le nombre de rangées ;
- lorsque x est le nombre de substrats enveloppés sur 3 côtés ; et
- lorsque y est le nombre de substrats enveloppés sur 2 côtés ;
x est égal à 2 fois z et y est égal à (z - 2), multiplié par z ou
- lorsque u est le nombre de substrats dans une rangée ;
- lorsque v est le nombre de rangées ;
- lorsque x est le nombre de substrats enveloppés sur 3 côtés ;
- lorsque y est le nombre de substrats enveloppés sur 2 côtés ;
alors x est égal à u + v et y est égal à u * v - x.

**13.** Procédé d'assemblage d'un élément antipollution ou d'un réacteur chimique selon les revendications 1 à 8, le procédé comprenant les étapes consistant à

a) fournir plus d'un substrat, dans lequel le substrat comprend une face avant, une face arrière et au moins trois faces latérales plates s'étendant entre la face avant et la face arrière ;
b) fournir le mat de montage ;
c) envelopper le mat autour du substrat de telle sorte qu'il recouvre au moins partiellement deux faces latérales plates et au moins partiellement le bord délimité par les deux faces latérales plates du substrat et le fixer ;

d) répéter l'étape c) aussi souvent que des substrats sont nécessaires pour assembler l'élément antipollution ou le réacteur chimique ;

e) placer les substrats enveloppés côte à côte de sorte que toutes les parois latérales plates des substrats sont placées à côté d'un mat de montage et

f) placer les substrats à l'intérieur d'un boîtier.

**FIG. 1**

**FIG. 2**

FIG. 3

FIG. 4

FIG. 5

FIG. 6

FIG. 7

FIG. 8A

FIG. 8B

FIG. 8C

**FIG. 9**

**FIG. 10**

**FIG. 11**

**FIG. 12**

2"  2""  2"  2"

2"

2""

2""

2""

2"

2""  2""

## FIG. 13

2""  2""

## FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20010030355 A1
- DE 3046921 A1
- WO 2012084609 A1
- EP 0501733 A1
- WO 2014125024 A1